# EUROPEAN PATENT APPLICATION

(11) **EP 2 230 751 A1**
(43) Date of publication of application: **22.09.2010**
(21) Application number: 09155236.4
(22) Date of filing: 16.03.2009
(51) Int. Cl.: H02K 9/06, H02K 9/10, H02K 21/30

(54) **An arrangement and method for cooling an electrical machine**

(71) Applicant: ABB Oy, 00380 Helsinki (FI)
(72) Inventor: Mäki-Ontto, Petri, 02720 Espoo (FI); Tyllinen, Yrjö, 12400 Tervakoski (FI); Kanninen, Pekka, 82900 Ilomantsi (FI)

(57) **Abstract**

In the arrangement according to the invention for cooling an electrical machine, the electrical machine comprises a rotor (1) rotating around its rotation axis (5) and a stator (2) located around the rotor at the end of an air gap (3). The rotor (1) comprises at least one axial cooling channel (7) originating from the first end of the rotor, the said cooling channel (7) joining at least one substantially radial channel (9). There is a cover (10) at the end (20) of the rotor (1), the said cover (10) having an opening (11) in the middle and a cover surface (13) extending from the edge of the opening to the outer edge of the cover (12). Between the cover (10) and rotor end (20) there are radial blades (15) attached to the cover (10), and between the cover (10) and rotor end (20) there is a cooling medium (6) discharge opening (19) to form a cooling medium jet (22a-d) at the air gap (3).

## Description

### Scope of the invention

The object of the invention is an arrangement for cooling an electrical machine according to the preamble part of Claim 1, and a method for cooling an electrical machine according to the preamble part of Claim 12.

### Prior art

Electrical machines are cooled to remove the heat generated within them. Heat is mostly generated in the active part of the electrical machine, the stator and the rotor, by magnetic and resistance losses.

In an electrical machine with a radial cooling system, cooling is often based on pressure generated by a rotor or an external blower. The cooling air flows into the rotor along axial channels and is then distributed into radial channels inside the rotor. Depending on the cooling solution, cooling air is conducted into the rotor from one or both ends of the rotor. In the radial channels, cooling air flows toward the rotor circumference and further toward the electrical machine's air gap.

Part of the cooling air will flow from the electrical machine's air gap into the radial channels of the stator, but part of the cooling air will discharge via the electrical machine's air gap to the ends of the electrical machine. This will result in less air flow into the stator and loss of cooling power.

A known method for reducing the discharge of air to the ends of the electrical machine via the electrical machine's air gap consists of eliminating radial channels at the ends of the machine. This will result in higher pressure loss being experienced by the discharge air. Elimination of cooling channels will, however, reduce the cooling power of the electrical machine.

### Description of invention

The purpose of the present invention is to create an arrangement for cooling an electrical machine and a method for cooling an electrical machine.

In order to achieve this, the invention is characterized by the features specified in the characteristics sections of Claims 1 and 12. Some other preferred embodiments of the invention have the characteristics specified in the dependent claims.

In the arrangement according to the invention for cooling an electrical machine, the electrical machine comprises a rotor rotating around its rotation axis and a stator located around the rotor at the end of an air gap. The rotor comprises at least one axial cooling channel originating from the first end of the rotor and joining at least one, substantially radial channel within the rotor. The end of the rotor comprises a cover with an opening in the middle and a cover surface extending from the edge of the opening to the outer edge of the cover. Between the cover and the rotor end, radial blades are attached to the cover. Between the cover and the rotor end there is a cooling medium discharge opening to form a cooling medium jet at the air gap.

In the method according to the invention for cooling an electrical machine, the electrical machine comprises a rotor rotating around its rotation axis and a stator located around the rotor at the end of an air gap. The first cooling medium flow is conducted into at least one axial cooling channel originating from the first end of the rotor, from which cooling channel the cooling medium is conducted into at least one substantially radial channel, which channel opens into the air gap. The second cooling medium flow is conducted through the opening in the middle of the cover at the end of the rotor into the space between the cover and the rotor end, where the speed of the cooling medium flow is increased with radial blades. The cooling air flow is conducted into the cooling medium discharge opening between the cover and the rotor end, where the cooling medium forms a cooling medium jet at the air gap.

The invention will reduce the discharge of cooling air via the electrical machine's air gap to the ends of the electrical machine. The arrangement and method according to the invention are advantageous for an electrical machine with a radial cooling system in which the cooling air flows into the rotor via axial channels and distributes into radial channels within the rotor. From the radial channels, the cooling air flows into the electrical machine's air gap. In the solution according to the invention, the discharge opening functions as a nozzle that generates a narrow jet-like cooling air flow. The volume flow of the air jet will be low and the velocity of the air jet will be high.

The rapid, narrow air jet at the air gap will prevent the air that has flown through the rotor from flowing out of the rotor via the air gap, making the air flow from the rotor through the air gap into the stator.

The invention requires no changes for the cooling channels of the rotor or the stator. For example, the number of cooling channels in the rotor can be retained the same, and the cooling power of the electrical machine will not deteriorate.

According to an embodiment of the invention, there is a ring attached to the outer edge of the cover. The ring will extend at least partly over the blades in the axial direction, and a cooling medium discharge opening will be formed between the ring and the rotor end.

If the outer diameter of the ring is equal to the outer diameter of the rotor or smaller, the ring can be installed to the rotor before the rotor and the stator are installed to place. If the outer diameter (d₂) of the ring is greater than the outer diameter (d₁) of the rotor, it must be installed after installation to the stator.

According to an embodiment of the invention, the ring is conical on the inner surface in order to guide the air jet.

According to another embodiment, the width of the cooling medium discharge opening is 5...50 per cent of the blade end width.

The ring attached to the outer edge of the cover and guiding the air jet into a more axial direction is a preferred solution in a salient-pole synchronous machine. The ring also guides the air jet into pole gaps, allowing additional air to push through the discharge opening into the stator via the rotor pole gaps.

According to an embodiment of the invention, there are cooling medium discharge openings included in the ring. The discharge openings may be, for example, circular or elliptical. The distances between two adjacent discharge openings on the ring may vary or be constant.

The discharge openings on the ring generate air jets that hit the stator coil ends and cool them.

The arrangement and method according to the invention are preferred for permanent-magnet electrical machines such as a permanent-magnet motor or permanent-magnet generator.

### Figures

In the following, the invention will be described in more detail with the help of certain embodiments by referring to the enclosed drawings, where
- Figure 1 illustrates a part of the cross-section of the rotor and the stator, in longitudinal direction of the rotor;
- Figure 2 illustrates a part of the cross-section of the rotor, in longitudinal direction of the rotor;
- Figure 3 illustrates part of the rotor end;
- Figure 4a-d illustrates the air jet;
- Figure 5 illustrates a part of the cross-section of the rotor, in longitudinal direction of the rotor;
- Figure 6 illustrates part of the rotor end;
- Figure 7 illustrates part of the rotor end;
- Figure 8 illustrates part of the rotor end.

### Detailed description

The electrical machine illustrated in the Figures is a permanent-magnet motor or a permanent-magnet generator. The cooling medium is preferably gaseous, such as air.

The electrical machine comprises a rotating rotor 1 and a stator 2 located around the rotor at the end of an air gap 3. The rotor 1 is manufactured of armature sheets 17, and has a cylindrical form. At the ends of the rotor, there are compression plates 18 that hold the rotor 1 together. Rotor 1 is installed on a rotor shaft 4, and it rotates around its rotation axis 5. The point of origin for the rotor radius r is on the rotation axis 5, and the end point is on the perimeter of the rotor.

Axial cooling channels 7 are located within rotor 1 below permanent magnets 8, near the outer surface of shaft 4. Cooling channels 7 join several radial r channels 9 in the rotor. Radial channels 9 are located sequentially in an axial direction within the rotor 1. Radial channels 9 extend through the rotor 1 from the outer surface of the shaft to the outer surface of the rotor and open into the electrical machine's air gap 3.

At the end 20 of the rotor 1 there is a cover 10 with an opening 11 at the center. The input edge of the opening 11 is rounded. The gaseous cooling medium flows into the rotor via the opening 11, and the rotor shaft 4 passes through the cover 10 through the opening 11. Cover 10 has cover surface 13 extending from the edge of opening 11 to the outer edge 12 of the cover. The cover 10 is attached to the end 20 of the stator 1 using fixing screws 14. Cover 10 may also be attached to the shaft 4 by, for example, a ring. Between cover 10 and the rotor end, there are radial blades fixed to the cover 10. Blades 15 are attached to cover 10 or rotor end plate 16. Between the cover 10 and rotor 1 end 20 there is a cooling medium (air) 6b discharge opening 19 to create a cooling medium jet 22a-d at air gap 3.

The blades 15 attached to cover 10 and stator end 20 create a substantially radial flow of cooling medium 6b as the blades 15 rotate with the rotor 1 around the rotor rotation axis 5. The blades 15 are used to create a radial r air flow 6b that flows from the rotor axis 4 toward the outer surface 21 of the rotor. Blades 15 and narrow discharge opening 19 create a slot-like air jet 22a-d of the cooling air 6b. The air jet will be narrow, the volume flow of the air jet will be low, and the velocity of the air jet will be high. The air jet 22a-d at the air gap 3 will prevent cooling medium 6b from flowing out via air gap 3.

Cover 10 is manufactured of a material with high mechanical strength that will endure the rotation speed of the rotor, such as fiberglass or cast iron.

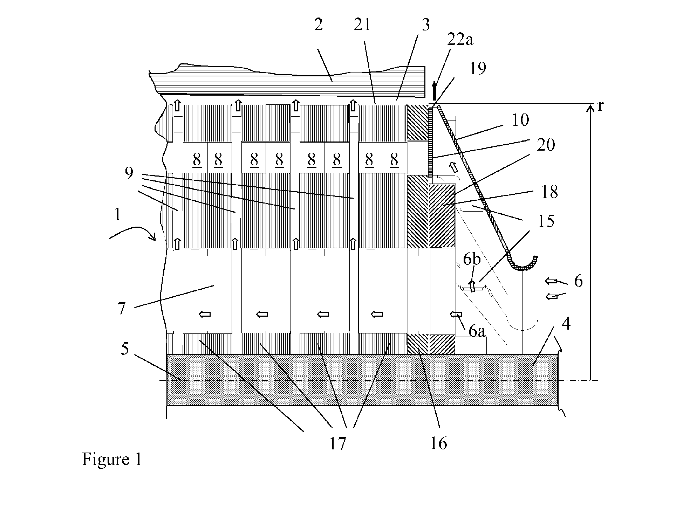

The cooling medium 6 will flow into rotor 1 through an opening 11 in the middle of the cover 10. The arrows in Figure 1 indicate the cooling medium flow. The first section of the cooling medium flow 6a enters the rotor 1 through the cooling channels 7, located at the ends of the rotor and running parallel to the rotor shaft 4. Part of the cooling medium 6a in the rotor flows into a radial channel 7 within the rotor and continues towards the outer surface of the rotor, and the rest of the cooling medium continues forward in the cooling channel 7 to enter the next radial channels 9. Cooling channels 7 open into air gap 3, and the cooling air flows from radial cooling channels 7 into the air gap and further into stator 2.

Another part of the cooling medium flow 6b flows through the opening 11 in the middle of cover 10 at the end 20 of rotor 1 and between cover 10 and rotor end 20. Between cover 10 and rotor end 20 the speed of the cooling medium flow 6b is increased using radial blades 15, and the cooling air will flow into cooling medium 6 discharge opening 19 between cover 10 and rotor end 20. There the cooling medium 6b will create a cooling medium jet 22a-d at air gap 3. Cooling medium jet 22a-d will prevent the cooling medium flow 6b from rotor 1 from flowing out of rotor 1 via air gap 3, forcing air flow 6b from rotor 1 to enter stator 2 via air gap 3.

Depending on the cooling solution, cooling air is conducted into the rotor from one or both ends of the rotor.

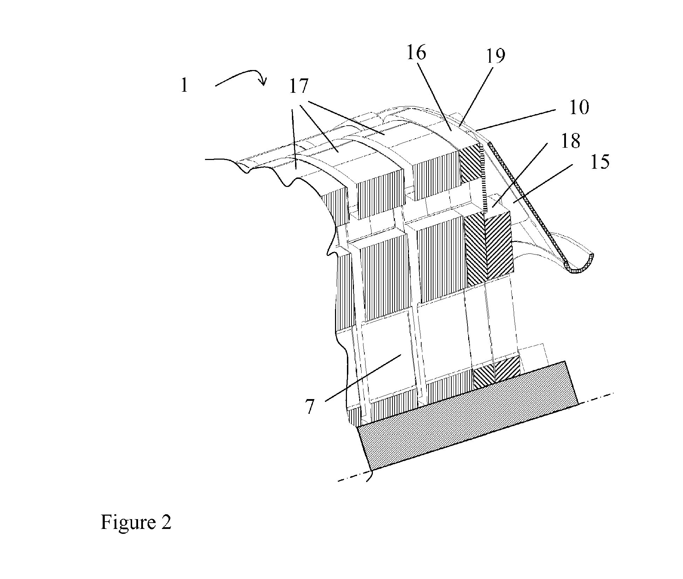

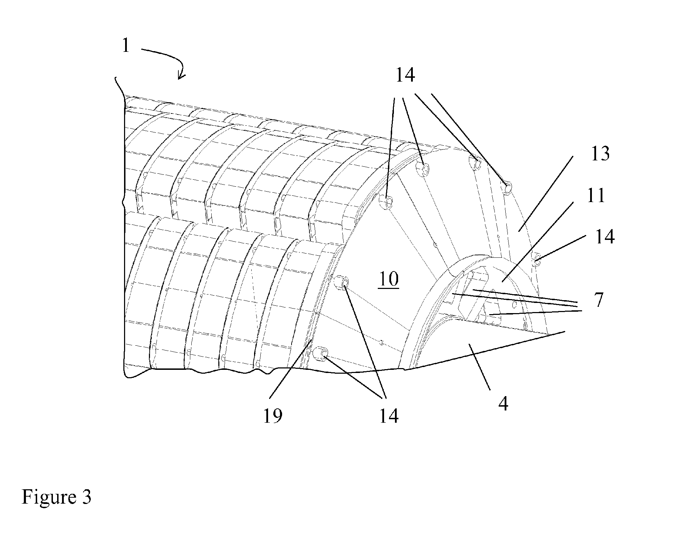

In Figures 1-4a), the air jet 22a flowing from the discharge opening 19 between cover 10 and rotor end 20 is substantially parallel to the radius of rotor 1. Air discharge opening 19 is open throughout the length of the outer edge of the cover, distributing the air jet 22a to the entire circumference.

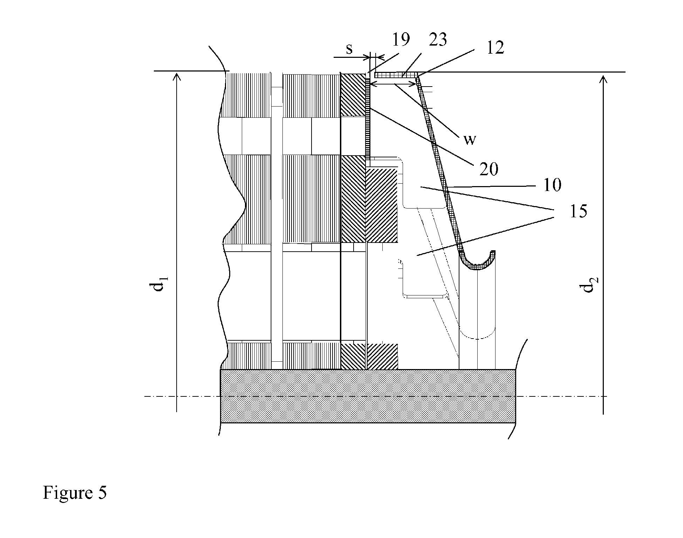

Figures 5-6 illustrate an embodiment in which the cover 10 has a cylindrical ring 23 attached to the outer edge 12 of the cover. The ring 23 is located between cover 10 and rotor end 20. The ring 23 extends partly over the blades 15 in the axial direction. A cooling medium discharge opening 19 is created between the ring 23 and rotor end 20.

The width of the cooling medium discharge opening in the axial direction is preferably 5...50 per cent of the blade end width w.

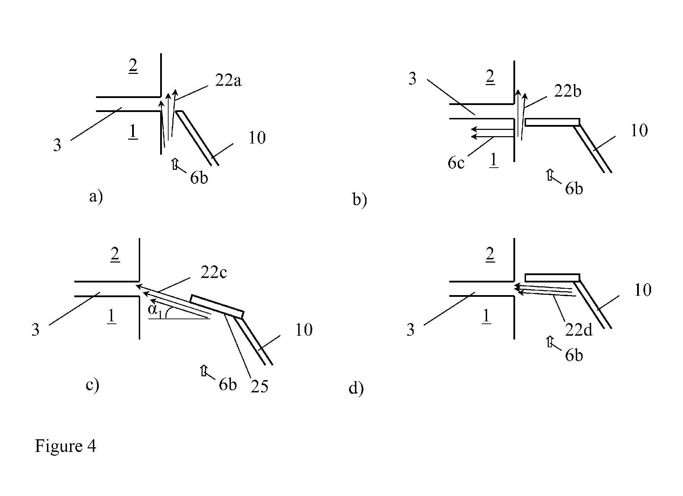

Blades 15 and narrow discharge opening 19 create a slot-like air jet 22b of the cooling air. The air jet 22b at air gap 3 will prevent cooling medium 6 from flowing out via air gap 3. The air jet 22b flowing from the discharge opening 19 between the ring 23 and rotor end 20 is parallel to the shaft and rotor 1 radius, Figure 4b).

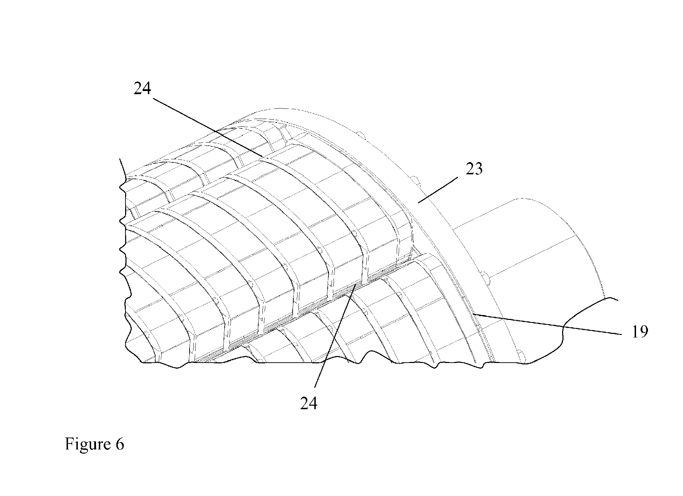

Figure 6 illustrates pole gaps 24 of an electrical machine. The electrical machine is a salient-pole synchronous machine. Ring 23 also guides an axial air jet to pole gaps 24, allowing additional air 6c to push through discharge opening 19 via rotor pole gaps 24 into stator 2.

Outer diameter d₂ of ring 23 is equal to the rotor outer diameter d₁ at most. Ring 23 will then remain below air gap 3 in the radial direction.

In Figure 4d) the outer perimeter d₂ of ring 23 is larger than outer perimeter d₁ of the rotor. Ring 23 will then remain above air gap 3 in the direction of the radius r. Ring 23 will guide the air jet 22d into air gap 3.

Ring 23 may also be for example conical on the inner surface. Figure 4c) illustrates a ring 23 that is conical on the inner surface 25 and guides the air jet 22c into air gap 3. Consequently, the angle α₁ between axial level and the air jet 22c flowing from discharge opening 19 between ring 23 and rotor end 20 will reduce.

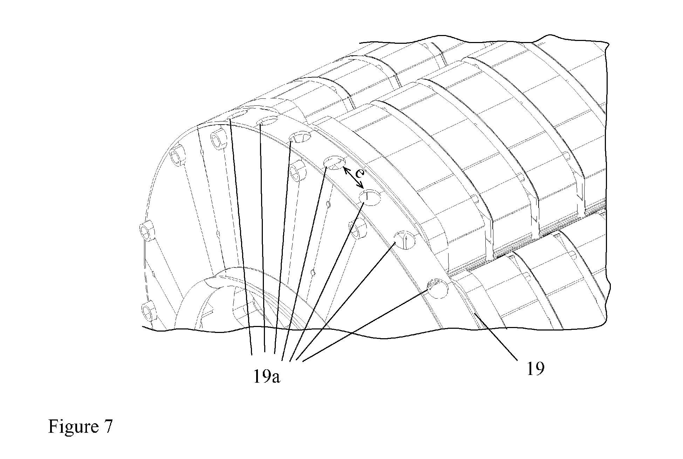

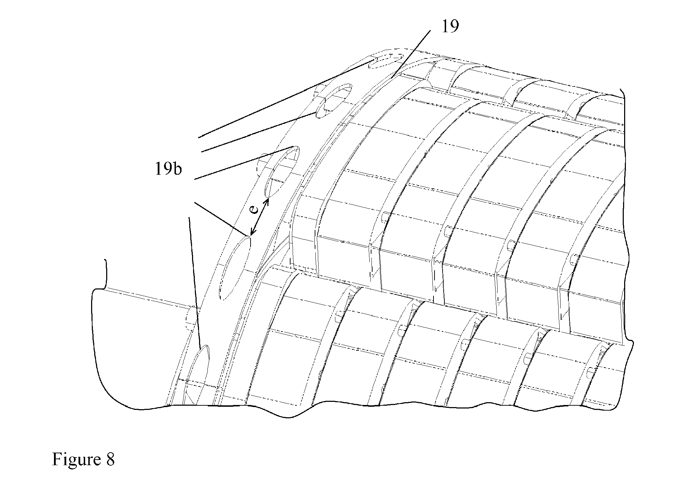

Figures 7 and 8 illustrate an embodiment in which cooling medium discharge openings 19a-b exist in the ring. The discharge openings are circular 10a or elliptical 19b. In the figures, the distance e between two adjacent discharge openings is constant. The distance between two adjacent discharge openings may also vary, resulting in various values for the distance e at various points of ring 23.

Discharge openings 19a-b existing in ring 23 create radial air jets that cool the stator coil (not illustrated in the figures). Consequently, air can also be targeted at stator coil ends.

The invention has been described above with the help of certain embodiments. However, the description should not be considered as limiting the scope of patent protection; the embodiments of the invention may vary within the scope of the following claims.

Parts list: 1 rotor; 2 stator; 3 air gap; 4 shaft; 5 rotation axis; 6, 6a-c cooling medium; 7 cooling channel; 8 permanent magnet; 9 channel; 10 cover; 11 opening; 12 outer edge; 13 cover surface; 14 fixing screw, 15 blade; 16 end plate; 17 armature sheet; 18 compression plate; 19, 19a-b discharge opening; 20 rotor end; 21 rotor circumference; 22a-d air jet; 23 ring; 24 pole gap; 25 inner surface of the ring. e distance; d₁ rotor outer diameter; d₂ ring outer diameter; r rotor radius, s width of the discharge opening; w blade end width, α₁ angle.

## Claims

1. Arrangement for cooling an electrical machine, the said electrical machine comprising a rotor (1) rotating around its rotation axis (5) and stator (2) located at the end of an air gap (3) around the rotor, the said rotor (1) comprises at least one axial cooling channel (7) originating from the first end of the rotor, the said cooling channel (7) joining at least one substantially radial channel (9) within the rotor, **characterized in that** the end (20) of the rotor (1) comprises a cover (10), the said cover (10) having an opening (11) in the middle and a cover surface (13) extending from the edge of the opening to the outer edge (12) of the cover, and **in that** radial blades (15) are attached to the cover (10) between the cover (10) and rotor end (20), and **in that** a cooling medium (6) discharge opening (19) is between the cover (10) and rotor end (20) to form a cooling medium jet (22a-d) at the air gap (3).

2. An arrangement according to Claim 1, **characterized in that** the cover (10) comprises a ring (23) attached to the outer edge of the cover, the said ring (23) extending partly over the blades (15) in the axial direction, and **in that** a cooling medium discharge opening (19) is formed between the ring and the rotor end.

3. An arrangement according to Claim 2, **characterized in that** the outer diameter of the ring (d₂) is equal to the outer diameter of the rotor (d₁) at most.

4. An arrangement according to Claim 2, **characterized in that** the outer diameter of the ring (d₂) is larger than the outer diameter of the rotor (d₁).

5. An arrangement according to Claim 2, **characterized in that** the ring (23) is conical on the inner surface (25).

6. An arrangement according to Claim 2, **characterized in that** the width of the cooling medium discharge opening (s) is 5...50 per cent of the blade end width (w).

7. Arrangement according to Claim 2, **characterized in that** cooling medium discharge openings (19a-b) exist on the ring (23).

8. Arrangement according to Claim 6, **characterized in that** the cooling medium discharge openings (19a-b) in the ring (23) are circular or elliptical.

9. Arrangement according to Claim 6, **characterized in that** the distance (e) between two adjacent discharge openings in the ring (23) varies.

10. An arrangement according to Claim 1, **characterized in that** the electrical machine is a permanent-magnet motor or permanent-magnet generator.

11. An arrangement according to Claim 1, **characterized in that** the motor is a salient-pole synchronous machine.

12. A method for cooling an electrical machine, the said method comprises an electrical machine comprising of a rotor (1) rotating around its rotation axis (5) and a stator (2) located around the rotor at the end of an air gap (3), and in which method the first cooling medium flow (6a) is conducted into at least one axial cooling channel (7) originating from the first end of the rotor, from which cooling channel (7) the cooling medium (6a) is conducted into at least one substantially radial channel (9), the said channel (9) being open to the air gap (3), **characterized in that** the second cooling medium flow (6b) is conducted through an opening (11) in the middle of the cover (10) at the end (20) of the rotor (1) into the space between the cover (10) and rotor end (20), in which space the speed of the cooling medium flow (6b) is increased with radial blades (15), and the cooling air flow is conducted (6b) into a cooling medium (6) discharge opening (19) between the cover (10) and rotor end (20), where the cooling medium (6b) forms a cooling medium jet (22a-d) at the air gap (3).
